# EUROPÄISCHE PATENTSCHRIFT

(11) **EP 1 213 463 B1**
(45) Veröffentlichungstag und Bekanntmachung des Hinweises auf die Patenterteilung: **13.12.2006**
(21) Anmeldenummer: 01124030.6
(22) Anmeldetag: 09.10.2001
(51) Int. Cl.: F02M 21/06

(54) **Verfahren und Vorrichtung zur Bereitstellung eines Arbeitsgases aus einem Kryokraftstoff für eine Brennkraftmaschine**
Method and apparatus for supplying a combustible gas of a cryogenic fuel for an internal combustion engine
Procédé et appareil d'alimentation d'un gaz combustible d'un carburant cryogénique pour un moteur à combustion interne

(30) Priorität: 07.12.2000 DE 10060792
(43) Veröffentlichungstag der Anmeldung: 12.06.2002
(73) Patentinhaber: Bayerische Motoren Werke Aktiengesellschaft, 80809 München (DE)
(72) Erfinder: Ringler, Jürgen, 86438 Kissing (DE); Fickel, Hans-Christian, 85368 Moosburg (DE)

(56) Entgegenhaltungen:
- DD-A- 214 172
- DE-A- 19 521 591
- DE-A- 19 602 441
- DE-A- 19 602 881
- FR-A- 2 517 367
- US-A- 4 548 187
- US-A- 5 499 615

## Beschreibung

Die Erfindung betrifft ein Verfahren und eine Vorrichtung zur Bereitstellung eines brenn- oder zündfähigen Arbeitsgases aus einem Kryokraftstoff, insbesondere Wasserstoff für eine Brennkraftmaschine.

Gegenstand der gattungsbildenden DD-PS 214 172 ist eine Einrichtung, mittels der in einem Verfahren gemäß dem Oberbegriff des Patentanspruches 1 zur Bereitstellung eines brennfähigen Arbeitsgases dieses aus kryogen gespeichertem Kryokraftstoff und Ansaugluft gebildet wird, bei welchem der Kraftstoff aus einem Kraftstoffvorratsbehältnis entnommen wird und der entnommene Kryokraftstoff durch einen Wärmetauscher geleitet und hierbei erwärmt wird, wobei über den Wärmetauscher die Ansaugluft gekühlt wird.

Zur Durchführung des Verfahrens mittels der bekannten Einrichtung umfasst diese in systembedingt bauaufwändiger Weise zwei beabstandet in Reihe angeordnete Wärmetauscher zur ausreichenden Erwärmung des Kraftstoffes einerseits und zur genügenden Abkühlung der Ansaugluft andererseits.

Während im vorbeschriebenen Verfahren mittels der bekannten Einrichtung eine indirekte Abkühlung der Ansaugluft erzielt wird , ist aus der deutschen Offenlegungsschrift DE 196 02 881 A1 ein Verfahren zum Versorgen eines Fahrzeugmotors mit einem Kryokraftstoff-/ Luftgemisch bekannt, bei dem gemäß einem Ausführungsbeispiel eine direkte Abkühlung der Ansaugluft durch Zumischung von kaltem, flüssigem Kryokraftstoff erzielt ist. Dieser wird in einen Mischer eingedüst, wobei je nach Umgebungstemperatur ein mehr oder weniger feuchtes Kraftstoffgas sich in nachteiliger Weise bilden kann.

Schließlich ist aus der US 5, 499, 615 A für eine Brennkraftmaschine ein Kraftstoff-Versorgungssytem bekannt mit in einem Tank flüssig bevorratetem Propan, das mittels eines Wärmetauschers vergast und über eine EinblasventilAnordnung einem Brennraum der Brennkraftmaschine zugeführt wird.

Der Erfindung liegt die Aufgabe zugrunde, ein Verfahren und eine Vorrichtung zum Betreiben einer Brennkraftmaschine derart zu verbessern, dass eine weitere Steigerung der Leistungsdichte sowie des Prozesswirkungsgrades der Brennkraftmaschine erreicht werden kann.

Diese Aufgabe wird erfindungsgemäß gelöst durch ein Verfahren, bei welchem Kryokraftstoff aus einem Kraftstoffvorratsbehältnis entnommen wird, wobei der entnommene Kraftstoff schubweise durch den Wärmetauscher hindurchgefördert wird, und der durch die Ansaugluft erwärmte Kryokraftstoff sowie die durch den Kryokraftstoff gekühlte Ansaugluft separat und zeitlich versetzt in den jeweiligen Brennraum der Brennkraftmaschine eingebracht werden.

Dadurch wird es auf vorteilhafte Weise möglich, den Zylinderbefüllungsgrad einer Brennkraftmaschine noch weiter zu steigern. In weiterhin vorteilhafter Weise wird durch die erfindungsgemäße Lösung etwaigen Rückzündungen im Bereich des Einlaß- oder Ansaugtraktes auf zuverlässige Weise vorgebeugt.

Gemäß einer besonders bevorzugten Ausführungsform der Erfindung wird der Kraftstoffdruck derart eingeregelt, daß bereits in dem Wärmetauscher ein Kraftstoffdruck herrscht, der wenigstens im Bereich des Verdichtungsdruckes liegt, der in dem Brennraum zu Beginn der Kraftstoffeinspeisung herrscht. Dadurch wird es auf vorteilhafte Weise möglich, den erwärmten Kraftstoff unter vergleichsweise geringem Förderleistungsbezug in den Brennraum einzubringen. Der erwärmungsbedingte Volumenzuwachs unterstützt zudem die separate Zuleitung des Kraftstoffes in den Brennraum. In vorteilhafter Weise wird es möglich, bei geringer Überschneidung der Öffnungsphasen der Ein- und Auslaßventile einen hohen Befüllungsgrad zu erreichen. Infolge der geringen Überschneidung wird es möglich, im Abgasbereich vergleichsweise hohe Abgasdrücke zuzulassen. Dies erweist sich insbesondere bei der Verwendung eines abgasbetriebenen Laders sowie im Hinblick auf eine hohe Laufruhe, als besonders vorteilhaft.

Gemäß einer besonders bevorzugten Ausführungsform der Erfindung wird der Kraftstoff in gasförmigem Zustand durch den Wärmetauscher geleitet. Hierbei wird es möglich, einen Pufferspeicher zur Deckung kurzfristig erhöhten Kraftstoffbedarfs vor dem Wärmetauscher anzuordnen. Hierdurch wird eine hohe Druckkonstanz am Ausgangsbereich des Wärmetauschers erreicht.

Alternativ zu der vorangehend genannten Maßnahme - oder in besonders vorteilhafter Weise auch in Kombination hiermit - ist es möglich, den Kraftstoff in flüssigem Zustand durch den Wärmetauscher zu leiten. Hierbei wird es möglich, im Wärmetauscher einen vergleichsweise großen Wärmestrom aus der angesaugten Luft abzuleiten. Hierbei lassen sich auch im Falle einer Aufladung, beispielsweise in Verbindung mit einem Abgasturbolader, vergleichsweise niedrige Verbrennungsspitzentemperaturen sowie eine verbesserte Klopffestigkeit erreichen. In vorteilhafter Weise erfolgt die Kühlung der Ansaugluft hierbei im Gegenstromprinzip.

Eine gemäß einem besonderen Aspekt der vorliegenden Erfindung besonders vorteilhafte Ausführungsform ist dadurch gegeben, daß der Kraftstoff mittels einer Hochdruck-Fördereinrichtung durch den Wärmetauscher schubweise gefördert wird und damit die erwärmungsbedingte Zunahme des spezifischen Volumens des Kraftstoffes im wesentlichen erst zum Zeitpunkt der Zylinderbefüllung erfolgt.

Gemäß einer besonders bevorzugten Ausführungsform der Erfindung handelt es sich bei dem verwendeten Kraftstoff um Wasserstoff. Dieser Wasserstoff wird vorzugsweise in einem wärmeisolierten Tank bevorratet, wobei der Kraftstoff in dem Tank vorzugsweise auf eine Temperatur von weniger als 24K abgekühlt ist.

Die zur Kühlung durch den Wärmetauscher vorgesehene Ansaugluft wird vorzugsweise vor Eintritt in den Wärmetauscher - oder in einem vereisungsgeschützten Abschnitt des Wärmetauschers getrocknet.

Es ist möglich, eine Bypassleitungseinrichtung vorzusehen, über welche ein Teilstrom der Ansaugluft an dem Wärmetauscher vorbeigeleitet werden kann. Die Trocknung der Ansaugluft erfolgt vorzugsweise durch Kühlung der Luft auf eine Temperatur unterhalb des Taupunktes. Die Abscheidung des Wassers kann durch Wirbelbildung unterstützt werden. Das ausgeschiedene Wasser kann abgeleitet und bei Betriebszuständen mit erhöhter Klopfgefahr der Brennkraftmaschine ggf. separat in den Brennraum eingebracht werden.

Die eingangs angegebene Aufgabe wird erfindungsgemäß auch gelöst durch eine Vorrichtung zur Bereitstellung eines brennfähigen Arbeitsgases aus kryogen gespeichertem Kryokraftstoff und sauerstoffhaltiger Ansaugluft für eine Brennkraftmaschine mit einer Entnahmeeinrichtung zur Entnahme von Kryokraftstoff aus einem wärmeisolierten Kraftstoffvorratsbehältnis, einem Wärmetauscher zur Erwärmung des entnommen Kryokraftstoffes und zur Kühlung der Ansaugluft, einer ersten Leitungseinrichtung zur Leitung der gekühlten Ansaugluft zu einem Einlaßbereich und einer zweiten Leitungseinrichtung zur Zuleitung des über die Ansaugluft erwärmten Kryokraftstoffes zu einem Brennraum separat von der durch den Kryokraftstoff gekühlten Ansaugluft.

Dadurch wird es insbesondere bei einem Kraftfahrzeug möglich, unter Nutzung des durch den Kraftstofftank bereitgestellten Kältepotentiales eine erhebliche Steigerung der Leistungsdichte der Brennkraftmaschine zu erreichen. In vorteilhafter Weise kann durch den erfindungsgemäß vorgenommenen Wärmetausch zwischen Kraftstoff und Ansaugluft der Kraftstoff ohne Volumenzunahme jedoch mit erhöhtem Speisedruck in den Brennraum eingebracht werden. Hierdurch wird ein erheblich verbesserter Füllungsgrad erreicht.

Der Wärmetauscher ist vorzugsweise derart ausgebildet, daß dieser einem Kraftstoffdruck standhält, der zumindest zeitweilig wenigstens im Bereich des Verdichtungsdruckes liegt, der in dem Brennraum zu Beginn der Kraftstoffeinbringung herrscht. Der Wärmetauscher kann als Gas/Gas Wärmetauscher oder - zur Erreichung tieferer Ansauglufttemperaturen - als Flüssig/Gas Wärmetauscher ausgebildet sein, so daß der Kraftstoff zumindest abschnittsweise in flüssigem Zustand den Wärmetauscher durchströmt. Insbesondere bei einer Anordnung des Wärmetauschers als Gegenstromwärmetauscher können hierbei extrem tiefe Temperaturen der Ansaugluft erreicht werden.

Vorzugsweise ist eine Hochdruck Fördereinrichtung vorgesehen zur zwangsweisen Förderung des Kraftstoffs durch den Wärmetauscher unter einem gegenüber dem Tankdruck erhöhten Druck.

Es ist in vorteilhafter Weise möglich, nach Erwärmung des Kraftstoffs durch die Ansaugluft, diesen weiter zu erhitzen, insbesondere durch einen Hochtemperaturwärmetauscher, der beispielsweise abgasbeheizt ist. Hierdurch wird es möglich, den Kraftstoff in die bereits hochverdichtete Ansaugluft einzubringen, wobei ein Teil der in dem Abgas enthaltenen Wärmemenge als mechanische Arbeit zurückgewonnen wird.

Im Hinblick auf einen zuverlässigen Betrieb der Brennkraftmaschine ist gemäß einer besonders bevorzugten Ausführungsform der Erfindung eine Trocknereinrichtung vorgesehen, zum Trocknen der Ansaugluft. Insbesondere bei einer Abkühlung der Ansaugluft unter den Gefrierpunkt wird hierbei auf vorteilhafte Weise eine Vereisung des Wärmetauschers vermieden.

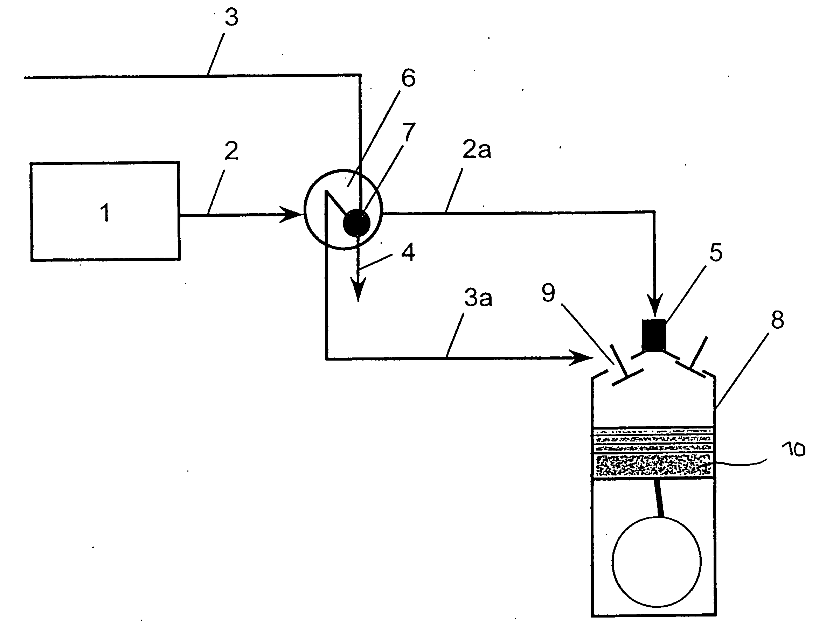

Weitere vorteilhafte Einzelheiten der Erfindung ergeben sich aus der nachfolgenden Beschreibung, in Verbindung mit der Zeichnung. Die einzige Figur zeigt:
Eine Schemadarstellung eines erfindungsgemäßen Systems zur Bereitstellung eines brennfähigen Arbeitsgases im Brennraum einer Brennkraftmaschine aus einem Kryokraftstoff, insbesondere Wasserstoff, unter separater Zuleitung der Kraftstofffraktion und der Oxidationsmittelgasfraktion zu einem Brennraum, sowie unter Zwischenschaltung eines Wärmetauschers zur Kühlung der Oxidationsmittelgasfraktion und zur Erwärmung der Kraftstofffraktion.

Das schematisch dargestellte System umfaßt einen thermisch isolierten Kryo-Tank 1, in welchem ein wenigstens auf seine Siedetemperatur gekühlter Kraftstoff bevorratet ist. Bei dem hier gezeigten System ist der Kryo-Tank 1 als Drucktank ausgebildet, wobei im Inneren des Kryo-Tanks 1 ein Druck im Bereich von 1 bis 28 bar herrscht.

An den Kryo-Tank 1 ist eine Leitungseinrichtung 2 angeschlossen. Diese Leitungseinrichtung 2 ist, gleichfalls wie der Kryotank 1, thermisch isoliert ausgebildet. Über die Leitungseinrichtung 2 kann selektiv flüssiger oder gasförmiger Kraftstoff aus dem Kryo-Tank 1 gefördert werden.

Die Leitungseinrichtung 2 führt über einen nach außen thermisch isolierten Wärmetauscher 6 zu einem Leitungsabschnitt 2a. Über den Leitungsabschnitt 2a ist die Leitungseinrichtung 2 unter Zwischenschaltung des Wärmetauschers 6 mit einer Einblasventilanordnung 5 verbunden.

Die Einblasventilanordnung 5 ist zur Regelung der eingebrachten Kraftstoffmenge nach Maßgabe einer Steuereinheit in verschiedenen Betriebsmodi betreibbar.

An den Wärmetauscher 6 ist eine hier als Saugleitung 3 bezeichnete Leitungseinrichtung angeschlossen, über welche ein sauerstoffhaltiges Gas angesaugt - oder unter Überdruck - hindurch gedrängt werden kann. Die Saugleitung 3 führt zu einem in dem Wärmetauscher 6 vorgesehenen Wärmetauschbereich, in welchem das sauerstoffhaltige Gas durch den seitens der Leitungseinrichtung 2 zugeführten Kraftstoff gekühlt wird. Bei der hier dargestellten Ausführungsform ist der Wärmetauschbereich derart ausgebildet, daß keine Vermischung des Kraftstoffes mit dem sauerstoffhaltigen Gas erfolgt. Es ist jedoch möglich, hier eine vorbestimmte Anreicherung vorzugsweise auf einen deutlich unterhalb der Zündgrenze liegenden Wert zuzulassen.

Das durch den Wärmetauscher 6 gekühlte, sauerstoffhaltige Gas gelangt über einen weiteren Leitungsabschnitt 3a in den Bereich eines taktgesteuerten Einlaßventiles 9 einer Brennkraftmaschine 8.

Im Bereich des Wärmetauschers 6 ist eine Luftentfeuchtungseinrichtung 7 vorgesehen, zur Vermeidung von Vereisungserscheinungen. Etwaiges, im Rahmen der Kühlung des sauerstoffhaltigen Gases hier anfallendes Kondensat kann vorzugsweise über eine Ableitungseinrichtung 4 abgeleitet werden. Das angefallene Kondensat kann über eine Leitungseinrichtung 4 abgeleitet werden.

Die Einblasventilanordnung 5 wird bei der dargestellten Ausführungsform vorzugsweise derart betätigt, daß die stöchiometrisch erforderliche Kraftstoffmenge durch den in dem Leitungsabschnitt 2a herrschenden Druck erst eingebracht wird, wenn der Kolben 10 der Brennkraftmaschine 8 den unteren Totpunkt UT durchlaufen hat. Insbesondere bei einer Betätigung des Ventils 9 mit variablen Steuerzeiten ist es möglich, mit der Einblasung des Kraftstoffes erst dann zu beginnen, wenn das Einlaßventil 9 nahezu geschlossen ist.

Bei einer Förderung des Kraftstoffes durch den Wärmetauscher 6 auf einem oberhalb des Kompressionsdruckes liegenden Druckpegels ist es möglich, den Kraftstoff erst unmittelbar zur Zündung in das verdichtete, sauerstoffhaltige Gas einzubringen.

Unter dem Begriff Ansaugluft ist im vorliegenden Fall ein gasförmiges Medium zu verstehen, das zumindest eine als Oxidationsmittel wirksame Gasfraktion enthält. Die Zuleitung der Ansaugluft zu dem Einlaßbereich der Brennkraftmaschine kann auch unter einem Druck erfolgen, der oberhalb des Umgebungsdruckes liegt.

## Patentansprüche

1. Verfahren zur Bereitstellung eines brennfähigen Arbeitsgases aus kryogen gespeichertem Kryokraftstoff und Ansaugluft, bei welchem der Kraftstoff aus einem Kraftstoffvorratsbehältnis entnommen wird und der entnommene Kryokraftstoff durch einen Wärmetauscher geleitet und hierbei erwärmt wird, wobei über den Wärmetauscher die Ansaugluft gekühlt wird,
**dadurch gekennzeichnet,**
**dass** der Kraftstoff schubweise durch den Wärmetauscher hindurchgefördert wird, und
**dass** der durch die Ansaugluft erwärmte Kryokraftstoff und die gekühlte Ansaugluft separat in einen Brenn- oder Arbeitsraum einer Brennkraftmaschine eingebracht werden.

2. Verfahren nach Anspruch 1, **dadurch gekennzeichnet, daß** in dem Wärmetauscher ein Kraftstoffdruck herrscht, der zumindest zeitweilig wenigstens im Bereich des Druckes liegt, der in dem Brennraum zu Beginn der Kraftstoffeinbringung herrscht.

3. Verfahren nach Anspruch 1 oder 2, **dadurch gekennzeichnet, daß** der Kraftstoff in gasförmigem Zustand durch den Wärmetauscher geleitet wird.

4. Verfahren nach Anspruch 1 oder 2, **dadurch gekennzeichnet, daß** der Kraftstoff zumindest abschnittsweise in flüssigem Zustand durch den Wärmetauscher geleitet wird.

5. Verfahren nach wenigstens einem der Ansprüche 1 bis 4, **dadurch gekennzeichnet, daß** der Wärmeaustausch zwischen der Ansaugluft und dem Kraftstoff nach dem Gegenstromprinzip erfolgt.

6. Verfahren nach wenigstens einem der Absprüche 1 bis 5, **dadurch gekennzeichnet, daß** der Kraftstoff durch eine dem Wärmetauscher vorgelagerte Hochdruck-Fördereinrichtung durch den Wärmetauscher gefördert wird.

7. Verfahren nach wenigstens einem der Ansprüche 1 bis 6, **dadurch gekennzeichnet, dass** als Kraftstoff Wasserstoff verwendet wird.

8. Verfahren nach wenigstens einem der Ansprüche 1 bis 7, **dadurch gekennzeichnet, dass** der Kraftstoff eine Temperatur von weniger als 20°K aufweist.

9. Verfahren nach wenigstens einem der Ansprüche 1 bis 8, **dadurch gekennzeichnet, dass** der Kraftstoff nach Kühlung der Ansaugluft durch Abwärme, insbesondere Abgaswärme, weiter erhitzt wird.

10. Verfahren nach wenigstens einem der Ansprüche 1 bis 9, **dadurch gekennzeichnet, dass** die Ansaugluft über eine Fördereinrichtung, insbesondere einen Lader, dem Brennraum zugeführt wird.

11. Verfahren nach wenigstens einem der Ansprüche 1 bis 10, **dadurch gekennzeichnet, dass** die Ansaugluft getrocknet wird.

12. Verfahren nach wenigstens einem der Ansprüche 1 bis 11, **dadurch gekennzeichnet, dass** die Trocknung durch Abkühlung der Ansaugluft unter deren Taupunkt erfolgt und dass das ausfallende Wasser abgeleitet wird.

13. Vorrichtung zur Bereitstellung eines brennfähigen Arbeitsgases aus kryogen gespeichertem Kryokraftstoff und sauerstoffhaltiger Ansaugluft für eine Brennkraftmaschine (8), mit einer Entnahmeeinrichtung zur Entnahme von Kryokraftstoff aus einem wärmeisolierten Kraftstoffvorratsbehältnis (1), einem Wärmetauscher (6) zur Erwärmung des schubweise durchgeleiteten Kryokraftstoffes und zur Kühlung der Ansaugluft, die mittels einer Leitungseinrichtung (3a) einem Einlassbereich (9) der Brennkraftmaschine (8) zugeführt ist, wobei eine separate Leitungs-einrichtung (2a) der Zuführung des über die Ansaugluft erwärmten Kryokraftstoffes zu einer einem Brennraum der Brennkraftmaschine (8) zugeordneten Einblasventilanordnung (5) dient.

14. Vorrichtung nach Anspruch 13, **dadurch gekennzeichnet, dass** der Wärmetauscher (6) derart ausgebildet ist, dass dieser einem Kraftstoffdruck standhält, der zumindest zeitweilig wenigstens im Bereich des Verdichtungsdruckes liegt, der in dem Brennraum zu Beginn der Kraftstoffeinbringung herrscht.

15. Vorrichtung nach Anspruch 13 oder 14, **dadurch gekennzeichnet, dass** der Wärmetauscher (6) als Gas/Gas- Wärmetauscher ausgebildet ist.

16. Vorrichtung nach Anspruch 13 oder 14, **dadurch gekennzeichnet, dass** der Wärmetauscher (6) als Flüssig/Gas - Wärmetauscher ausgebildet ist derart, dass der Kraftstoff zumindest abschnittsweise in flüssigem Zustand den Wärmetauscher durchströmt.

17. Vorrichtung nach wenigstens einem der Ansprüche 13 bis 16, **dadurch gekennzeichnet, dass** der Wärmetauscher (6) ein Gegenstromwärmetauscher ist.

18. Vorrichtung nach wenigstens einem der Ansprüche 13 bis 17, **dadurch gekennzeichnet, dass** eine Hochdruckförderung vorgesehen ist zur Förderung des Kraftstoffes durch den Wärmetauscher (6) unter einem gegenüber dem Tankdruck erhöhten Druck.

19. Vorrichtung nach wenigstens einem der Ansprüche 13 bis 18, **dadurch gekennzeichnet, dass** eine Fördereinrichtung vorgesehen ist zur Förderung der Ansaugluft in den Arbeitsraum der Brennkraftmaschine (8) unter Überdruck.

20. Vorrichtung nach wenigstens einem der Ansprüche 13 bis 19, **dadurch gekennzeichnet, dass** eine Trocknereinrichtung (7) vorgesehen ist zum Trocknen der Ansaugluft.

## Claims

1. A method of preparing a combustible working gas from cryogenically stored fuel and intake air, wherein the cryogenic fuel is taken from a storage container and conveyed through and heated by a heat exchanger, through which the intake air is cooled,
**characterised in that**
the cryogenic fuel is conveyed intermittently through the heat exchanger and
the fuel heated by the intake air and the cooled intake air are separately introduced into a combustion chamber or working chamber of an internal combustion engine.

2. A method according to claim 1, **characterised in that** the pressure in the heat exchanger is at least temporarily at least near the pressure in the combustion chamber at the beginning of fuel introduction.

3. A method according to claim 1 or claim 2, **characterised in that** the fuel is conveyed in gaseous form through the heat exchanger.

4. A method according to claim 1 or claim 2, **characterised in that** the fuel is at least partly in liquid form when conveyed through the heat exchanger.

5. A method according to at least one of claims 1 to claim 4, **characterised in that** the heat exchange between the intake air and the fuel occurs in counter-current.

6. A method according to at least one of claims 1 to claim 5, **characterised in that** the fuel is conveyed through the heat exchanger by a high-pressure conveyor disposed in front of the heat exchanger.

7. A method according to at least one of claims 1 to claim 6, **characterised in that** the fuel is hydrogen.

8. A method according to at least one of claims 1 to claim 7, **characterised in that** the fuel has a temperature below 20K.

9. A method according to at least one of claims 1 to claim 8, **characterised in that** the fuel after cooling the intake air is additionally heated by waste heat, preferably from the exhaust.

10. A method according to at least one of claims 1 to claim 9, **characterised in that** the intake air is conveyed to the combustion chamber by a conveyor, especially a supercharger.

11. A method according to at least one of claims 1 to claim 10, **characterised in that** the intake air is dried.

12. A method according to at least one of claims 1 to claim 11, **characterised in that** drying is effected by cooling the intake air below its dew point and the precipitated water is run off.

13. A method of providing a combustible working gas from cryogenically stored fuel and oxygen-containing intake air for an internal combustion engine (8), comprising a means for withdrawing cryogenic fuel from a heat-insulated storage chamber (1) and a heat exchanger (6) for heating the intermittently conveyed cryogenic fuel and for cooling the intake air supplied by piping (3a) to an inlet region (9) of the engine (8), wherein separate piping (2a) conveys the cryogenic fuel heated by the intake air to an injection valve arrangement (5) associated with a combustion chamber of the engine (8).

14. A device according to claim 13, **characterised in that** the heat exchanger (6) is constructed to withstand a fuel pressure which at least temporarily is at least near the compression pressure in the combustion chamber at the beginning of fuel introduction.

15. A device according to claim 13 or claim 14, **characterised in that** the heat exchanger (6) is a gas/gas heat exchanger.

16. A device according to claim 13 or claim 14, **characterised in that** the heat exchanger (6) is a liquid/gas heat exchanger such that at least part of the fuel flows in the liquid state through the heat exchanger.

17. A device according to at least one of claims 13 to claim 16, **characterised in that** the heat exchanger (6) operates in counter-current.

18. A device according to at least one of claims 13 to claim 17, **characterised in that** a high-pressure conveyor is provided for conveying the fuel through the heat exchanger (6) at a pressure greater than the tank pressure.

19. A device according to at least one of claims 13 to claim 18, **characterised in that** a conveyor is provided for conveying the intake air at excess pressure in the working chamber of the engine (8).

20. A device according to at least one of claims 13 to claim 19, **characterised in that** a dryer (7) is provided for drying the intake air.

## Revendications

1. Procédé de préparation d'un gaz actif combustible à partir de carburant cryogénique stocké à l'état cryogénique et d'air d'admission selon lequel on prélève le carburant dans un réservoir d'alimentation en carburant et on fait passer le carburant cryogénique ainsi prélevé à travers un échangeur de chaleur pour le réchauffer, l'échangeur de chaleur refroidissant l'air aspiré,
**caractérisé en ce que**
le carburant est transféré par fraction à travers l'échangeur de chaleur, et
le carburant cryogénique réchauffé par l'air aspiré et l'air aspiré refroidi, sont introduits séparément dans la chambre de travail ou chambre active du moteur à combustion.

2. Procédé selon la revendication 1,
**caractérisé en ce qu'**
il règne une pression de carburant dans l'échangeur de chaleur qui au moins de temps en temps se situe dans la plage de la pression régnant dans la chambre de combustion au début de l'introduction du carburant.

3. Procédé selon la revendication 1 ou 2,
**caractérisé en ce que**
le carburant est conduit à l'état gazeux à travers l'échangeur de chaleur.

4. Procédé selon l'une des revendications 1 ou 2,
**caractérisé en ce que**
le carburant est conduit au moins par fractions à l'état liquide à travers l'échangeur de chaleur.

5. Procédé selon l'une quelconque des revendications 1 à 4,
**caractérisé en ce que**
l'échange de chaleur entre l'air aspiré et le carburant se fait à contre-courant.

6. Procédé selon au moins l'une des revendications 1 à 5,
**caractérisé en ce que**
le carburant est transféré à travers une installation de transfert à haute pression en amont de l'échangeur de chaleur, à travers l'échangeur de chaleur.

7. Procédé selon au moins l'une des revendications 1 à 6,
**caractérisé en ce que**
le carburant est de l'hydrogène.

8. Procédé selon au moins l'une des revendications 1 à 7,
**caractérisé en ce que**
le carburant a une température inférieure à 20 K.

9. Procédé selon au moins l'une des revendications 1 à 8,
**caractérisé en ce qu'**
après refroidissement de l'air aspiré par la chaleur dégagée on continue de réchauffer le carburant notamment par la chaleur des gaz d'échappement.

10. Procédé selon au moins l'une des revendications 1 à 9,
**caractérisé en ce que**
l'air aspiré est fourni par une installation de transfert notamment à une chambre de charge de la chambre de combustion.

11. Procédé selon au moins l'une des revendications 1 à 10,
**caractérisé en ce qu'**
on sèche l'air aspiré.

12. Procédé selon au moins l'une des revendications 1 à 11,
**caractérisé en ce que**
le séchage se fait par refroidissement de l'air aspiré en dessous du point de rosée et évacuation de l'eau produite.

13. Dispositif de préparation d'un gaz actif combustible à partie d'une de carburant cryogénique stocké à l'état cryogénique et d'air d'admission contenant de l'oxygène pour un moteur à combustion interne (8) comportant une installation de prélèvement pour prendre du carburant cryogénique dans un réservoir de carburant (1), isolé thermiquement, un échangeur de chaleur (6) pour chauffer par fraction le carburant cryogénique qui le traverse et refroidir l'air aspiré qui est fourni par l'intermédiaire d'une installation de conduite (3a) à une zone d'entrée (9) du moteur à combustion interne (8), une installation de conduite (2a) distincte assurant l'alimentation du carburant cryogénique réchauffé par l'intermédiaire de l'air d'aspiration dans un dispositif à soupape d'injection (5) associé à une chambre de combustion du moteur à combustion interne (8).

14. Dispositif selon la revendication 13,
**caractérisé en ce que**
l'échangeur de chaleur (6) est réalisé pour résister à la pression d'un carburant qui est au moins par moment dans la plage de la pression de compression régnant dans la chambre de combustion au début de l'introduction du carburant.

15. Dispositif selon la revendication 13 ou 14,
**caractérisé en ce que**
l'échangeur de chaleur (6) est un échangeur de chaleur gaz / gaz.

16. Dispositif selon la revendication 13 ou 14,
**caractérisé en ce que**
l'échangeur de chaleur (6) est un échangeur de chaleur liquide / gaz de sorte que le carburant traverse au moins en partie l'échangeur de chaleur à l'état liquide.

17. Dispositif selon au moins l'une des revendications 13 à 16,
**caractérisé en ce que**
l'échangeur de chaleur (6) fonctionne à contre-courant.

18. Dispositif selon au moins l'une des revendications 13 à 17,
**caractérisé par**
un transfert à haute pression du carburant à travers l'échangeur de chaleur (6) sous une pression élevée par rapport à celle du réservoir de pression.

19. Dispositif selon au moins l'une des revendications 13 à 18,
**caractérisé par**
une installation de transfert pour transférer l'air aspiré dans la chambre de travail du moteur à combustion interne (8) sous pression.

20. Dispositif selon au moins l'une des revendications 13 à 19,
**caractérisé par**
une installation de séchage (7) pour sécher l'air aspiré.
